# EUROPEAN PATENT SPECIFICATION

(11) **EP 0 488 155 B1**
(45) Date of publication and mention of the grant of the patent: **28.02.1996**
(21) Application number: 91120160.6
(22) Date of filing: 26.11.1991
(51) Int. Cl.: C21D 9/56, F26B 13/18, B21B 27/08, B29C 33/02, D21F 5/02

(54) **Roll charged with heat transfer medium**
Mit einem Wärmeübertragungsmedium gefüllte Walze
Cylindre contenant un agent de transfert de chaleur

(30) Priority: 27.11.1990 JP 321036/90; 27.11.1990 JP 123515/90 U
(43) Date of publication of application: 03.06.1992
(73) Proprietor: MITSUBISHI JUKOGYO KABUSHIKI KAISHA, Tokyo (JP); KAWASAKI STEEL CORPORATION, Chuo-Ku, Kobe-Shi Hyogo-Ken (JP)
(72) Inventor: Mizuta, Keiji, c/o Mitsubishi Jukogyo K.K., Hiroshima-shi, Hiroshima-ken (JP); Hashimoto, Ritsuo, c/o Mitsubishi Jukogyo K.K., Hiroshima-shi, Hiroshima-ken (JP); Takeoka, Yasuyoshi, c/o Mitsubishi Jukogyo K.K., Hiroshima-shi, Hiroshima-ken (JP); Kishida, Akira, c/o Chiba Seitetsusho of, Chiba-shi, Chiba-ken (JP); Muramoto, Harumasa, c/o Chiba Seitetsusho of, Chiba-shi, Chiba-ken (JP)
(74) Representative: Henkel, Feiler, Hänzel & Partner

(56) References cited:
- EP-A- 0 156 790
- FR-A- 2 185 046
- GB-A- 528 477
- GB-A- 619 457
- GB-A- 925 791
- GB-A- 2 130 341
- JP-A-61 147 819
- US-A- 3 291 204
- KUNSTSTOFFE, vol. 43, no. 6, June 1953, pages P 41 - P 42, Kunststoff-Praxis, Beilage zur Zeitschrift Kunststoffe, München, DE; K. NEEF: "Elektrische Heizeinrichtungen für Walzen und Trockenzylinder"

## Description

### BACKGROUND OF THE INVENTION

The present invention relates to a roll charged with a heat transfer medium as defined by the features of the preamble of claim 1, such as a wringer roll in iron manufacturing machine process facilities, a heating roll in a continuous annealing furnace, and a hurst roll in continuous annealing facilities.

In a conventional roll charged with a heat transfer medium, a heater 02 is arranged close to an internal surface of a roll 01 so as to come in contact with a heat transfer medium 03 charged inside the hollow roll 01 as shown in Fig. 7. Besides, a reference numeral 04 indicates a plate passing the roll as a conveyance material used for heat exchange with the roll.

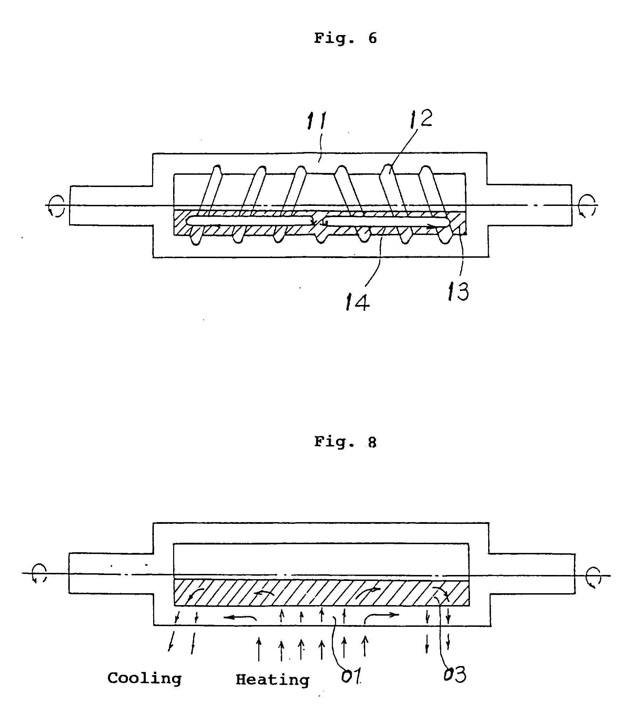

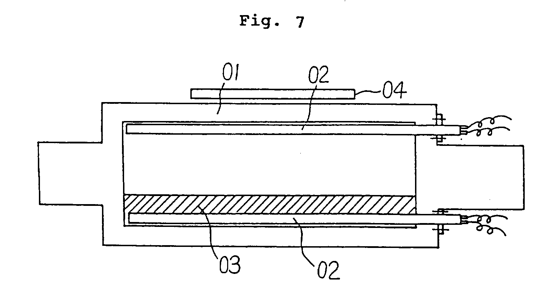

Further, as shown in Fig. 8, in another conventional roll charged with a heat transfer medium, the heat transfer medium 03 is charged into a roll shell 01, the central part of the roll shell 01 is heated by means of a plate passing the roll, and natural convection of the heat transfer medium 03 and turbulence of the flow of the heat transfer medium 03 caused by rotation of the roll shell transfer heat in addition to thermal conduction of the roll shell 01. This roll charged with a heat transfer medium is used in a wringer roll and the like for wiping off molten salt attached to a steel plate.

In the above-described conventional roll charged with a heat transfer medium shown in Fig. 7, it is required to expose the heat transfer medium to atmospheric air when the heater is damaged and needs to be replaced. As a result, it is required to remove the roll from a line without leakage of the heat transfer medium and thus to change the position thereof. Further, it becomes necessary to evacuate the inside of the roll again after replacing the heater in case a heat transfer medium having a vapor pressure lower than atmospheric pressure at room temperature is charged in a vacuum state. This increases costs for the maintenance of the roll.

Further, in this conventional roll charged with a heat transfer medium, a difference in temperature between a contact area and other portions is produced in an axial direction of the roll by a thermal load applied from a plate and an attached liquid thereof when a plate as a conveyed material is passing. Thus, uniform heat exchange cannot be performed between the plate and the roll, and a thermal peak or an uneven temperature distribution is produced on the roll due to temperature difference in the axial direction of the roll, thus making the pressing pressure against the plate non-uniform in the axial direction of the roll.

In particular, in a heater roll (wringer roll) used in a process line of iron manufacturing machines for wiping off the liquid attached to a steel plate at a high temperature, the roll temperature rises markedly only at the contact area of a steel plate in the axial direction of the roll since a steel plate at a high temperature is passing, and the temperature at the roll end portions is low. Thus, above-described problems are produced notably at the roll end portion. In addition, the temperature at the roll end portion becomes lower than the solidifying point of the wiped liquid. As a result, there is such a drawback that solidified matters are accumulated at the roll end portion, which makes continuous operation impossible.

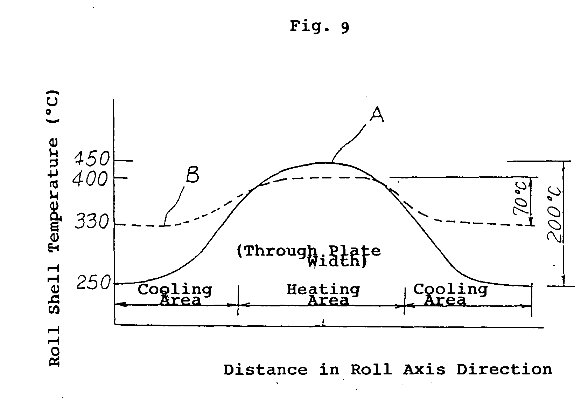

Further, when the above-described conventional roll charged with a heat transfer medium shown in Fig. 8 is used for a wringer roll, a temperature difference of approximately 200°C is produced in the roll shell in the axial direction of the roll shell as shown with a curve A in Fig. 9 between a heating area at the central part in the axial direction of the roll in contact with a passing plate, and a cooling area at the end portions in the axial direction of the roll, where there is no plate present, due to the thermal load of the passing plate. This is due to the fact that the heat transfer capacity of the charged heat transfer medium is high only in the circumferential direction of the roll because of the rotation of the roll, and the heat transfer capacity in the axial direction is small since heat transfer by turbulence in heat transfer medium flow and natural convection only is generated in the axial direction of the roll. As a result, the roll shell has such problems that a thermal peak or an uneven temperature distribution is produced, thus causing lowering of wiping performance of the conveyance material and solidification of the wiped liquid at the end portion of the roll.

From GB-A-528 477 there is known a pressure roll comprising the features of the preamble of claim 1. In this known pressure roll an immersion heating device is placed inside a hollow portion of a roll body which is partially filled with water or some other vaporisable liquid an is hermetically sealed at its ends.

Another heated rotary cylinder is described in GB-A-2 130 341 and discloses a hollow cylindrical roller coaxially of which an electric resistance heater is arranged in an oil bath not completely filling the interior of the roller. Inside the hollow roller and coaxially with the heater there is additionally provided a tubular core provided with holes directed towars the inner wall of the roller.

A still further heat transfer roll is known from US-A-3 291 204 and discloses a roll consisting of a cylindrical shaft or inner shell and a coaxially cylindrical outer shell spaced radially from the inner shell in order to provide a sealed chamber therebetween to be filled with a heat transfer liquid. On the outer surface of the inner shell there are arranged helical vanes extending in a direction from the center to the ends of the roll to create a circulation towards the ends.

### SUMMARY OF THE INVENTION

It is an object of the present invention to solve the above-described problems of a conventional roll charged with a heat transfer medium. This object is solved by providing a roll charged with a heat transfer medium as defined in claim 1.

The following measures have been taken in a roll charged with a heat transfer medium according to the present invention.
(1) A first hollow section which can be opened to atmospheric air is provided in a central axis portion from one axial end of the roll, and a rod-shaped heater is provided on the central axis inside the first hollow section, metal having a low melting point is filled into the first hollow section surrounding the heater, and a heat transfer medium is charged in a second hollow intermediate section provided on the periphery of the first hollow section.
(2) A heat transfer medium vapor mole fraction in a vapor phase in the roll is preferably made at 80% or more in a temperature area while the roll was in use.
(3) A spiral groove or a fin is preferably provided on an internal surface of the hollow portion charged with the heat transfer medium.

According to the present invention described in the above item (1), the metal having a low melting point is molten by a heater and the heat generated by the heater is transferred to the heat transfer medium through a pocket, thereby the roll is heated with high heat transport efficiency.

When the heater is replaced, the heater is taken out of the roll by opening the pocket to atmospheric air after heating the roll to the melting point of the metal having a low melting point or higher for melting the metal. Thus, the heater can be replaced easily irrespectively of the heat transfer medium without opening the heat transfer medium in the roll to atmospheric air. Further, it is possible to replace the heater with the heater roll kept in its position.

In the preferred embodiment of the present invention described in the above item (2), the heat transfer medium has been heated uniformly in the axial direction of the roll by means of the heater. When the roll is subject to the thermal load by the plate which is passing and the temperature thereof rises partially, the heat transfer medium heated by the heater evaporates in the area where the temperature has risen, and the vapor thereof flows in the axial direction of the roll and condenses on a low temperature portion of the internal surface of the roll shell, thus applying heat of condensation to this part. The heat transfer medium thus effects heat transport operation as a heat pipe, the temperature at all the parts inside the roll which the heat transfer medium vapor can each is unified. Moreover, the heat transfer medium vapor mole fraction is at 80% or more in the vapor phase in the roll. Thus, condensation of the heat transfer medium vapor on a wall surface on the low temperature side of the roll will never be obstructed, and the unification of the temperature of the roll is achieved sufficiently. With this, the thermal peak of the roll is prevented from being generated so that the pressing pressure against the plate becomes constant. Further, the temperature at the roll end portion rises, thus preventing solidification of the liquid wiped off the plate.

Furthermore, the whole roll area is preheated uniformly to a predetermined temperature by actuating the heater before the plate is moved passing the roll.

In the embodiment of the present invention described in the above item (3), when the roll rotates, the heat transfer medium flowing along the internal surface of the roll shell also produces convection in the axial direction by means of the spiral groove or the fin. The heat transport in the axial direction of the roll is accelerated with the convection, and the temperature difference in the axial direction of the roll shell is reduced.

### BRIEF DESCRIPTION OF THE DRAWINGS

Fig. 1 shows explanatory views for explaining a wringer roll according to a first embodiment of the present invention, in which Fig. 1(a) is a longitudinal sectional front view and Figs. 1(b) and (c) are sectional views taken along lines A-A and B-B in Fig. 1(a), respectively;
Fig. 2 is an explanatory view of a wringer roll having a feature according to a second embodiment of the present invention;
Fig. 3 is a graph showing temperature distribution in an axial direction of a roll in an experimental example of the present invention and a conventional case;
Fig. 4 is a graph showing the relationship between the maximum temperature difference in the axial direction of the roll and the heat transfer medium charging volumetric ratio in an experimental example of the present invention;
Fig. 5 is a graph showing the relationship between the maximum temperature difference in the axial direction of the roll and the heat transfer medium vapor mole fraction;
Fig. 6 is an explanatory view showing a feature of a third embodiment of the present invention;
Fig. 7 is an explanatory view of a conventional wringer roll;
Fig. 8 is an explanatory view of a conventional roll charged with a heat transfer medium; and
Fig. 9 is a temperature distribution diagram in the axial direction in the third embodiment of the present invention and a conventional roll charged with a heat transfer medium.

### DESCRIPTION OF THE PREFERRED EMBODIMENT

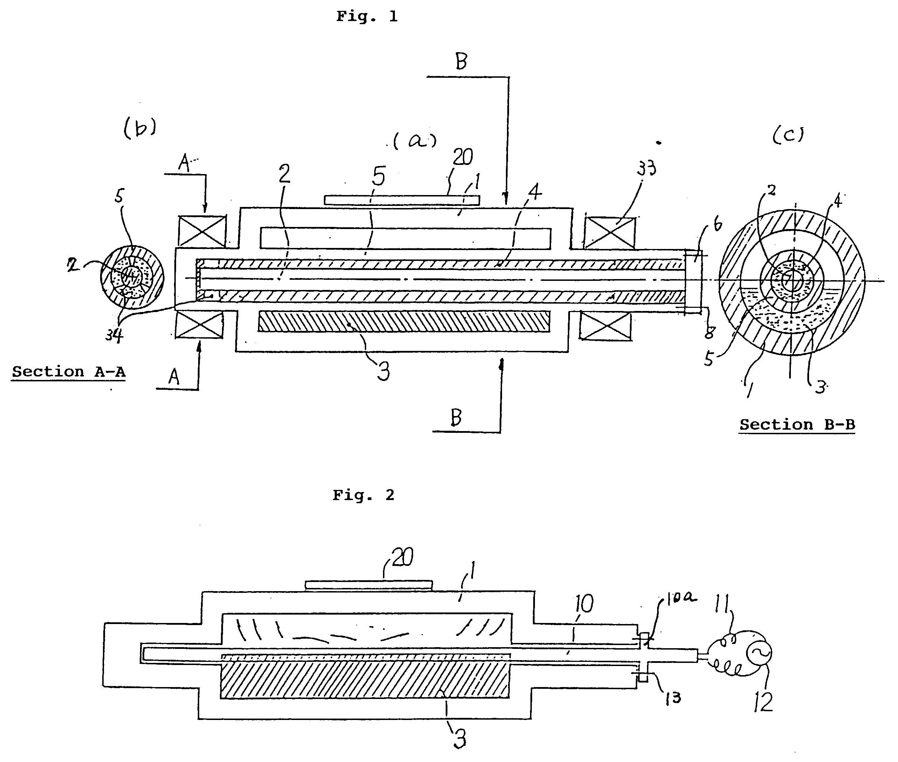

A first embodiment of the present invention will be described with reference to Fig. 1.

The present embodiment is a wringer roll for wiping off molten salt which is adhered to a steel plate at a temperature of approximately 450°C, in which an inner tube 5 extending over the whole length in an axial direction of a hollow roll 1 is provided at a central part of the section in the hollow roll 1 as one body with the roll 1 and concentrically therewith. K, Na, molten salt, dowtherm A, Hg and the like are charged as a heat transfer medium 3 in a space between the inner tube 5 and the roll 1. Inside the inner tube 5 are contained a rod-shaped heater 2 arranged on a central axis of the inner tube 5 and wood metal (Bi 55%, Pb 45%) 4 as metal having a low melting point. One end of the inner tube 5 is closed by the roll 1, and another end is open. This opening is closed by means of a cover 6 fitted to the inner tube 5 by a bolt 8, thus forming a pocket. A cable (not shown) feeds electric current to the heater 2, and 20 denotes a steel plate which is passing a heater roll.

In the roll 1, the heat transfer medium 3 is charged so as to wet at least a part of the sectional periphery of the inner tube 5, and the vapor mole fraction of the heat transfer medium 3 in a vapor phase in the roll 1 is set to be 80% or more in the temperature area while the roll is in use, by exhausting gas other than the heat transfer medium in the roll 1.

The present embodiment is assembled as follows.
(1) An outer tube of the roll 1, an inner tube 5, a bearing 33, a heater 2, a heat transfer medium 3 and metal having a low melting point (wood metal) 4 are prepared.
(2) The outer tube and the inner tube 5 of the roll are joined by welding through an end plate.
(3) Two holes are opened in the end plate on one side, and the roll 1 is arranged vertically so that these holes face upward vertically.
(4) The heat transfer medium is injected through one hole while exhausting air through the other hole.
(5) Even after the heat transfer medium is injected in such a predetermined quantity that at least a part of the sectional periphery of the inner tube is wetted, air is continued to be exhausted until the above-described vapor mole fraction of the heat transfer medium is obtained.
(6) The above-described two holes are sealed by welding.
(7) Metal having a low melting point (wood metal) is put into the inner tube from the upper end portion. The quantity is to be selected such, that all the clearances are filled after the heater will have been inserted later.
(8) The heater heated to a temperature corresponding to the melting point of the metal having a low melting point (124°C for the wood metal) is inserted into the inner tube while melting the metal having a low melting point, the end portion is fixed to the inner tube with a bolt, and the cover 6 is fitted to the end surface of the inner tube with a bolt 8 so as to close the inside of the inner tube. Numeral, 34 denotes a supporting bolster.
(9) Heating with the heater is stopped, and the roll is arranged horizontally.

In the present embodiment, when the heater 2 is supplied with power, the wood metal 4 as the metal having a low melting point is molten first, and the heat transfer medium 3 located in the space between the inner tube 5 and the roll 1 is heated, thus heating the roll 1. Since the wood metal 4 permeates the clearance between the heater 2 and the inner tube 5, heat transfer is achieved with high heat transport efficiency.

In case the heater 2 is replaced, the whole roll is heated to the melting point of the wood metal 4 (124°C) or higher, so as to melt the wood metal 4. It is possible to take out the heater 2 of the inner tube 5 after removing the cover 6 in this state. At this time, the heat transfer medium 3 is not exposed to atmospheric air and the heat transfer medium 3 does not leak out of the roll. Further, evacuation after replacement of the heater is not required.

Further, since at least a part of the sectional periphery of the inner tube 5 is wetted by the heat transfer medium 3, the heat transfer medium 3 is heated to almost the same temperature in the axial direction of the roll 1. When the roll 1 is subject to a thermal load by the steel plate 20 which is passing the roll, and the temperature thereof rises partially, in the area where the temperature has risen, the heat transfer medium 3 heated by the heater 2 as described above is evaporated, the vapor thereof flows in the axial direction of the roll 1 and condenses on the internal surface of the roll shell having a low temperature, and this portion is subject to heating by condensation. In this manner the heat transfer medium 3 performs heat transport operation as a heat pipe, and the temperature at all portions inside the roll the heat transfer medium vapor can reach, is unified.

Moreover, in the vapor phase in the roll 1, the mole fraction of the heat transfer medium vapor has reached 80% or more. Thus, condensation of the heat transfer medium vapor on the wall surface on the low temperature side of the roll will never be obstructed, thus making it possible to unify the temperature inside the roll 1 sufficiently.

By unifying the temperature in the axial direction of the roll 1, the thermal peak or an uneven temperature distribution is prevented from being generated on the roll 1, the pressing pressure against the steel plate 20 which is passing becomes constant, and wiping capacity with respect to adhered liquid will never be reduced. Further, the temperature at the end portion of the roll 1 is raised and the wiped off liquid is prevented from solidification by unifying the temperature in the axial direction of the roll 1.

Furthermore, it is possible to preheat the roll 1 uniformly to a predetermined temperature in the axial direction of the roll 1 by actuating the heater 2 before making a plate pass the roll 1.

Besides, the wood metal has been used in the present invention, but an alloy including Pb at 0 to 95% by weight, Bi at 0 to 70% by weight and Si at 0 to 70% by weight may be used.

A second embodiment of the present invention will be described with reference to Fig. 2.

The present invention is a wringer roll for wiping off molten salt which has adhered to a steel plate at the temperature of approximately 450°C in a similar manner as described in connection with the first embodiment. Potassium is charged as the heat transfer medium 3 in the hollow roll 1, and a rod-shaped sheath heater is arranged on the central axis of the roll 1. The sheath heater 10 is connected with a power source 12 by a cable 11. Further, the sheath heater 10 is detachably fitted to one end portion of the roll 1 by a bolt 13 at a flange portion 10a.

Further, the heat transfer medium 3 in the hollow roll 1 is charged in an amount of 50% of the content volume of the space in the hollow roll 1 so as to wet about a half of the sectional periphery of the sheath heater 10. (The vapor pressure of potassium at 20°C is at 0.013 Pa (0.0001 Torr) or less). Further, the gas other than the heat transfer medium in the hollow roll 1 is exhausted, so that the vapor pressure of components other than the heat transfer medium in a vapor phase in the roll 1 is set at 1.33 Pa (0.01 Torr) or less at 20°C.

Since approximately half of the sectional periphery of the sheath heater 10 is wetted by the heat transfer medium 3, the heat transfer medium 3 is heated to almost the same temperature in the axial direction of the roll 1. When the roll 1 is subject to a thermal load by the passing steel plate 20 and the temperature thereof rises partially, the heat transfer medium 3 heated by the sheath heater 10 is evaporated in the area where the temperature has risen as described above, the vapor thereof flows in the axial direction of the roll 1 and condenses on the low temperature portion of the internal surface of the roll shell, and this portion is subject to heat of condensation. In this manner, the heat transfer medium 3 performs heat transport operation as a heat pipe, and the temperature at all the portions inside the roll 1 which the heat transfer medium vapor can reach is unified.

Moreover, in the present embodiment in which a steel plate at the temperature of approximately 450°C is passing the roll as described above, the roll temperature reaches approximately 400°C and the vapor pressure of potassium as the heat transfer medium rises to 533.29 Pa (4 Torr), whereas the vapor pressure other than potassium is at 3.05 Pa (0.01 x $\frac{\text{673}}{\text{293}}$ = 0.023 Torr), and the heat transfer medium vapor mole fraction becomes 0.995. Accordingly, condensation of the heat transfer medium vapor on the wall surface at a low temperature is not obstructed by other components, and the temperature inside the roll 1 can be unified sufficiently.

As described above, in the present embodiment, the thermal peak or an uneven temperature distribution is prevented from being generated on the roll 1, the pressing pressure against the passing steel plate 20 becomes constant, and the wiping capacity of the adhered liquid will never be reduced by unifying the temperature in the axial direction of the roll 1. Further, by unifying the temperature in the axial direction of the roll 1, the temperature at the end portion of the roll 1 is raised, and the wiped off liquid will never be solidified.

Furthermore, it is possible to preheat the roll uniformly in the axial direction of the roll by actuating the sheath heater 10 before letting pass the steel plate 20.

An experimental example of the present invention will be described hereinafter.

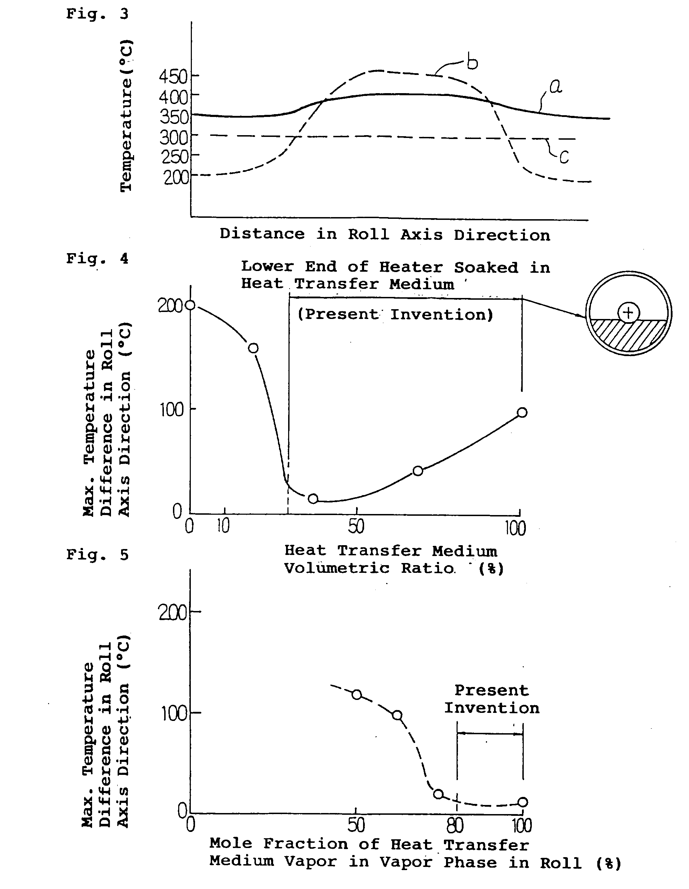

An apparatus including a roll having an outside diameter of 100 mmφ, an inside diameter of 80 mmφ and a length of 2,000 mm according to the second embodiment shown in Fig. 2 was used, and potassium was charged as the heat transfer medium in the roll in an amount of 50% of the content volume. Further, the pressure in a vapor phase of components other than potassium in a vapor phase was set at 1.33 Pa (0.01 Torr) or less. A curve a in Fig. 3 shows temperature distribution of the roll when a steel plate at 450°C is passing at 1,66 m/s (100 mpm). As against the above, a curve b shows temperature distribution in a conventional hollow wringer roll. With this, the temperature difference in the axial direction of the roll becomes 1/3 or lower of a conventional case according to the present invention. Thus, the thermal peak also becomes 1/3 or less. Further, it has been confirmed with respect to the roll end that though the temperature has been less than c (the solidifying point of the molten salt) in the conventional roll, that of this embodiment becomes c or higher, and solidification of salt at the roll end has been dissolved.

Fig. 4 shows the maximum temperature difference in the axial direction of the roll when the charged quantity of the heat transfer material is changed in the above-described experimental example of the present invention. When the heat transfer medium no longer wets the heater, the electric heat transferred to the heat transfer material from the heater is reduced sharply, and the temperature difference of the roll becomes larger.

Fig. 5 shows the relationship between the heat transfer medium vapor mole fraction in a vapor phase in the roll and the maximum temperature difference in the axial direction of the roll in the above-described experimental example of the present invention. When the ratio of vapor other than heat transfer medium vapor reaches 20% or more, the heat transfer quantity is reduced because condensation of the heat transfer medium vapor on the wall surface on the low temperature side is obstructed, and the temperature difference of the roll becomes larger.

A third embodiment of the present invention will be described with reference to Fig. 6. The present embodiment relates to a wringer roll of an iron manufacturing machine process line.

A spiral groove 12 is provided on an internal surface of a hollow roll shell 11 charged with a heat transfer medium 13. The groove 12 is formed in spiral shapes having opposite directions bilaterally from the center in the axial direction of the roll shell 11, respectively.

In the present embodiment, the heat transfer medium 13 produces a flow toward the end of the roll shell 11 in the axial direction of the roll shell 11 by the groove 12 with the rotation of the roll shell 11, and convection is also produced in the axial direction as shown with a reference numeral 14 in Fig. 6. With this, heat transport is accelerated in the axial direction of the roll, thus making it possible to reduce the temperature difference in the axial direction of the roll shell.

Thus, in a conventional wringer roll, salt has solidified at both ends thereof because of low temperature of the roll shell. In the present embodiment, however, salt does not solidify because the end portion of the wringer roll also reaches a temperature close to that of the central portion, thus making it possible to wipe off the salt as it is in a liquid form and to make maintenance of the wringer roll unnecessary.

A curve B in Fig. 9 shows the temperature of the roll shell in the present embodiment when potassium is used as the heat transfer medium, the heat transfer medium is charged in the quantity of 50% of the content volume of the roll shell, and the roll shell is rotated at 300 rpm. As against a curve A showing the shell temperature of a conventional wringer roll under the same condition, the temperature difference in the axial direction is 1/2 or less in a curve B according to the present embodiment.

Besides, a spiral groove is provided on the internal surface of the roll shell, but similar operation and effects may be achieved by providing a spiral fin.

As explained above, conventionally, when a heater of a roll charged with a heat transfer medium is replaced, the roll is removed from a line and returned to a line again after checking that there is no leakage of the heat transfer medium of the roll after replacing the heater, thus requiring tremendous cost. According to the present invention set forth in Claim 1, however, metal havinga low melting point and a heater are contained in a pocket which can be opened to atmospheric air in the roll shell. Therefore, it is possible to replace the heater as it is kept on-line irrespective of the heat transfer medium and to reduce the maintenance cost.

In the present invention set forth in Claim 2, it is possible to unify the temperature in the axial direction of the roll, and to reduce the thermal peak on the roll. With this, when a passing plate material is wiped with pinching, it becomes possible to perform uniform wiping in the plate width direction and to prevent solidification of the wiped off liquid at the roll end, thus making it possible to eliminate the maintenance of the roll.

Furthermore, in the present invention set forth in Claim 3, it is possible to generate a flow in the axial direction of the roll shell in the heat transfer medium in the roll shell and to reduce the temperature difference in the axial direction of the roll shell by providing a spiral groove or fin on the internal surface of the hollow roll shell charged with a heat transfer medium.

## Claims

1. A roll (1) charged with a heat transfer medium (3), wherein
a first hollow portion which can be opened to atmospheric air is provided at a central axis portion of the roll (1); and
a rod-shaped heater (2) is provided on the central axis in said first hollow portion;
characterized in that
metal having a low melting point (4) is filled into said first hollow portion surrounding said heater (2); and
the heat transfer medium (3) is charged in a second hollow intermediate portion provided on the periphery of said first hollow portion.

2. A roll (1) charged with a heat transfer medium (3) according to claim 1,
characterized in that
a heat transfer medium vapor mole fraction (3) in a vapor phase in the roll (1) is made to 80% or more in a temperature area while the roll is in use.

3. A roll (1) charged with a heat transfer medium (3) according to claim 1 or 2,
characterized in that
a spiral groove (12) or fin is provided on an internal surface of the hollow portion charged with the heat transfer medium (3).

## Patentansprüche

1. Mit einem Wärmeübertragungsmedium (3) gefüllte Walze (1), wobei
ein erster hohler Bereich, der zur Atmosphärenluft hin geöffnet werden kann, auf einem Mittelachsabschnitt der Walze (1) vorgesehen ist und
auf der Mittelachse im ersten hohlen Bereich ein stabförmiges Heizelement (2) vorgesehen ist,
dadurch gekennzeichnet, daß
in den das Heizelement (2) umgebenden ersten hohlen Bereich ein Metall eines niedrigen Schmelzpunkts (4) eingefüllt ist und
das Wärmeübertragungsmedium (3) in einen zweiten hohlen Zwischenbereich, der am Umfang des ersten hohlen Bereichs vorgesehen ist, eingebracht ist.

2. Mit einem Wärmeübertragungsmedium (3) gefüllte Walze (1) nach Anspruch 1,
dadurch gekennzeichnet, daß
eine Wärmeübertragungsmediumdampf-Molfraktion (3) in einer Dampfphase innerhalb der Walze (1) in einem Temperaturbereich, während sich die Walze im Betrieb befindet, auf 80% oder mehr eingestellt ist.

3. Mit einem Wärmeübertragungsmedium (3) gefüllte Walze (1) nach Anspruch 1 oder 2,
dadurch gekennzeichnet, daß
an einer Innenfläche des mit dem Wärmeübertragungsmedium (3) gefüllten hohlen Bereichs eine wendelförmige Nut (12) oder Rippe vorgesehen ist.

## Revendications

1. Un cylindre (1) contenant un agent (3) de transfert de chaleur, dans lequel
une première partie creuse qui peut être ouverte sur l'air atmosphérique est prévue sur une partie d'axe central du cylindre (1) ; et
un élément de chauffage (2) en forme de tige est prévu sur l'axe central dans ladite première partie creuse ;
caractérisé en ce que du métal (4) présentant un faible point de fusion est placé dans ladite première partie creuse en entourant ledit élément de chauffage (2) ; et
l'agent (3) de transfert de chaleur est chargé dans une seconde partie creuse intermédiaire prévue sur la périphérie de ladite première partie creuse.

2. Un cylindre (1) contenant un agent (3) de transfert de chaleur selon la revendication 1,
caractérisé en ce que
une fraction molaire de la vapeur de l'agent (3) de transfert de chaleur en phase vapeur dans le cylindre (1) est rendue à 80% ou plus dans une zone de température lorsque le cylindre est utilisé.

3. Un cylindre (1) contenant un agent (3) de transfert de chaleur, selon la revendication 1 ou 2
caractérisé en ce que
une gorge (12) ou une ailette en hélice est prévue sur une surface intérieure de la partie creuse contenant l'agent (3) de transfert de chaleur.
